# EUROPÄISCHE PATENTANMELDUNG

(11) **EP 4 549 117 A1**
(43) Veröffentlichungstag der Anmeldung: **07.05.2025**
(21) Anmeldenummer: 24207099.3
(22) Anmeldetag: 17.10.2024
(51) Int. Cl.: B29B 7/74, B29B 7/82, B29B 7/90

(54) **VERFAHREN ZUR HERSTELLUNG EINER KAUTSCHUKGRUNDMISCHUNG**

(30) Priorität: 01.11.2023 DE 102023210841
(71) Anmelder: Continental Reifen Deutschland GmbH, 30175 Hannover (DE)
(72) Erfinder: Dr. Glöckner, Andreas, 30175 Hannover (DE); Rennmann, Tim, 30175 Hannover (DE)
(74) Vertreter: Continental Corporation

(57) **Zusammenfassung**

Die Erfindung betrifft ein Verfahren zur Herstellung einer Kautschukgrundmischung mit einer Mischvorrichtung, umfassend die Verfahrensschritte: a) Herstellen einer ersten Kautschukzusammensetzung, umfassend ein oder mehrere erste Kautschukmaterialien, und einen oder mehrere Füllstoffe, wobei die erste Kautschukzusammensetzung in der Mischkammer eines ersten Mischaggregats der Mischvorrichtung durch Mischen der Bestandteile hergestellt wird, b) Herstellen oder Bereitstellen einer zweiten Kautschukzusammensetzung, umfassend ein oder mehrere zweite Kautschukmaterialien in einem kombinierten Massenanteil von 80 % oder mehr, bezogen auf die Masse der zweiten Kautschukzusammensetzung, wobei die zweite Kautschukzusammensetzung in der Mischkammer eines zweiten Mischaggregats der Mischvorrichtung hergestellt oder bereitgestellt wird, wobei die zweite Kautschukzusammensetzung in der Mischkammer des zweiten Mischaggregats in Folge eines mechanischen Mischens erwärmt wird, c) Überführen der ersten Kautschukzusammensetzung aus der Mischkammer des ersten Mischaggregats in die Mischkammer des zweiten Mischaggregats, d) Vermischen der ersten Kautschukzusammensetzung mit der erwärmten zweiten Kautschukzusammensetzung in der Mischkammer des zweiten Mischaggregats zum Erhalt der Kautschukgrundmischung.

## Beschreibung

Die Erfindung betrifft ein Verfahren zur Herstellung einer Kautschukgrundmischung sowie ein darauf aufbauendes Verfahren zur Herstellung einer Kautschukfertigmischung und zur Herstellung eines Gummiproduktes, insbesondere eines Fahrzeugreifens.

Im Allgemeinen erfolgt die Herstellung von Kautschukmischungen, wie sie beispielsweise bei der Herstellung von Fahrzeugreifen eingesetzt werden, in mindestens zwei Mischstufen, nämlich durch Herstellung einer Kautschukgrundmischung und einer Kautschukfertigmischung. Zur Herstellung der Kautschukgrundmischung werden alle Bestandteile der Mischung, wie Kautschuke, Füllstoffe, Verarbeitungsmittel, Alterungsschutzmittel, Ozonschutzmittel und weitere übliche Zusatzstoffe mit Ausnahme der Vulkanisationschemikalien (beispielsweise Schwefel und Vulkanisationsbeschleuniger) miteinander unter Energieeintrag vermischt. Nach der Fertigstellung der Kautschukgrundmischung, deren Abkühlung und eventueller Lagerung werden dann zur Herstellung der Kautschukfertigmischung die Bestandteile des Vulkanisationssystems, bei niedrigeren Temperaturen eingemischt. Die vorliegende Erfindung betrifft insbesondere die Herstellung einer Kautschukgrundmischung, welche im Nachgang zu einer Kautschukfertigmischung weiterverarbeitet werden kann, aus der anschließend durch Vulkanisation Gummiprodukte, beispielsweise Fahrzeugreifen, erhalten werden können.

Bei der Herstellung entsprechender Kautschukmischungen werden neben den bekannten Single-Mischern auch sogenannte Tandem-Mischer eingesetzt, welche eine Obermaschine und eine unterhalb der Obermaschine angeordnete Untermaschine umfassen. Die Obermaschine verfügt regelmäßig über einen sogenannten Stempelkneter, wobei die Untermaschine üblicherweise mit einer stempellosen Kneteinrichtung ausgestattet ist und ein in der Regel größeres Volumen besitzt. Derartige Tandem-Mischer sind beispielsweise aus den Druckschriften EP 0 618 055 A1 und WO 2017/097452 A1 bekannt. Weitere Informationen zum technologischen Hintergrund sind beispielsweise in der US 2018290337 A1 oder der EP 3932640 A1 offenbart.

Auch wenn im Stand der Technik Verfahrensführungen entwickelt wurden, in denen vom üblichen Vorgehen abgewichen wird, beispielsweise indem ein Teil der Zusatzstoffe erst in der Untermaschine zugegeben wird, erfolgt in der weit überwiegenden Zahl der Fälle im Stand der Technik die Zugabe sämtlicher Komponenten in die Obermaschine. Dieses etablierte Vorgehen ist jedoch mit Nachteilen verbunden, die in großen Teilen auch von den im Stand der Technik verfügbaren komplexeren Verfahrensführungen nicht bzw. nicht gänzlich zufriedenstellend gelöst werden.

Insbesondere wird als nachteilig empfunden, dass das Gesamtgewicht der im Mischer herstellbaren Charge durch das Volumen der regelmäßig kleinere Obermaschine begrenzt wird.

Darüber hinaus erfordert das Einbringen der Komponenten in die Obermaschine, beispielsweise das Platzieren der Kautschukballen auf das Förderband, welches zumeist händisch erfolgt, erheblichen Aufwand und stellt eine Belastung für die eingesetzten Arbeitskräfte dar.

Darüber hinaus stellt die Eingabe sämtlicher Komponenten der Kautschukgrundmischung in die Obermaschine hohe Anforderungen an die genaue Einwaage der Komponenten, sodass die eingesetzten Kautschuke in vielen Fällen nicht einfach als Ballenware eingegeben werden können, sondern zuvor vielmehr passend portioniert werden müssen.

Des Weiteren ist es für viele Kautschuke, beispielsweise Naturkautschuk, in bestimmten Verfahren sinnvoll, diese durch einen zuvor erfolgenden Mastikationsschritt zu bearbeiten, um das für den Mischprozess und weitere dem Mischen folgende Prozessschritte gewünschte Eigenschaftsprofil zu erzeugen, insbesondere hinsichtlich der Viskosität. Dieser Schritt ist bei klassischen Verfahrensführungen regelmäßig nicht leicht in einen Tandemmischer zu integrieren und setzt daher eine vorausgehende Verarbeitung des Kautschuks voraus.

Zudem war es eine Aufgabe der vorliegenden Erfindung, idealerweise die Notwendigkeit separater, außerhalb des Tandemmischers durchgeführter Mastikationsschritte zu entfernen.

Es war folglich eine Aufgabe der vorliegenden Erfindung, ein Verfahren zur Herstellung von Kautschukgrundmischungen in einer zeit- und kosteneffizienten Art und Weise zu ermöglichen. Hierbei war es eine Vorgabe, dass die mit dem anzugebenden Verfahren herstellbaren Kautschukgrundmischungen eine hohe Homogenität und Qualität aufweisen sollten, sodass aus diesen leistungsfähige Kautschukfertigmischungen und anschließend entsprechende leistungsfähige Gummiprodukte herstellbar sein sollten.

Insoweit war es eine Aufgabe der vorliegenden Erfindung, dass mit dem anzugebenden Verfahren die Chargengröße der herzustellenden Kautschukgrundmischungen erhöht werden sollte, wünschenswerterweise ohne hierfür konstruktive Änderungen an den eingesetzten Anlagen vornehmen zu müssen.

Eine weitere Aufgabe der vorliegenden Erfindung ist darin zu sehen, dass die körperliche Belastung, welche die im Verfahren eingesetzten Arbeitskräfte erfahren, reduziert werden sollte.

Zudem war es eine Aufgabe der vorliegenden Erfindung, die Dosierung der Komponenten der Kautschukgrundmischung im Herstellungsprozess zu vereinfachen, wobei es insbesondere wünschenswert war, dass der eingesetzte Kautschuk als Ballenware eingesetzt werden kann, ohne dass zuvor eine umfassende Gewichtseinstellung erfolgen muss, beispielsweise durch Zuschnitt des Kautschukmaterials.

Zudem war es eine Aufgabe der vorliegenden Erfindung, idealerweise die Notwendigkeit separater Mastikationsschritte zu entfernen.

Es war eine weitere Aufgabe der vorliegenden Erfindung, ein auf dem anzugebenden Verfahren aufbauendes Verfahren zur Herstellung einer Kautschukfertigmischung sowie ein daran anknüpfendes Verfahren zur Herstellung eines Gummiproduktes bereitzustellen.

Es war eine sekundäre Aufgabe der vorliegenden Erfindung, zudem ein mit dem Verfahren zur Herstellung eines Gummiproduktes herstellbares Gummiprodukt, insbesondere einen Fahrzeugreifen, bereitzustellen.

Die Erfinder der vorliegenden Erfindung haben nunmehr gefunden, dass sich die vorstehend beschriebenen Aufgaben lösen lassen, wenn ein Teil des für die Gesamtkautschukgrundmischung vorgesehenen Kautschuks nicht in die Obermaschine gegeben wird, sondern in der Untermaschine bereitgestellt wird, in der der entsprechende Teil des Kautschukmaterials anschließend mit der in der Obermaschine vorgemischten Mischung vermischt wird, um die Kautschukgrundmischung zu erhalten, wie es in den Ansprüchen definiert ist.

Hierdurch wird in vorteilhafter Weise das größere Volumen der Untermaschine ausgenutzt, um das Gesamtvolumen der Charge zu erhöhen. Darüber hinaus lässt sich der Kautschuk in der Untermaschine vorbearbeiten, beispielsweise im Rahmen von Mastikationsschritten. Die gewonnene Flexibilität hinsichtlich des Gesamtchargengewichtes erlaubt es in vorteilhafter Weise, Kautschukmaterial ohne eine zuvorige Zuschneidung, beispielsweise in der Form von Ballenware, in die Untermaschine zu geben und die Einstellung der gewünschten Mischungszusammensetzung über die Portionierung der sonstigen Bestandteile in der Obermaschine zu steuern, wodurch der Verarbeitungsaufwand und die körperliche Belastung der im Verfahren eingesetzten Arbeitskräfte sinkt.

Darüber hinaus haben die Erfinder gefunden, dass die körperliche Beanspruchung der im Verfahren eingesetzten Arbeitskräfte in vorteilhafter Weise dadurch weiter reduziert werden kann, dass die Zuführung des Kautschukmaterials in die Untermaschine, beispielsweise in der Form von Ballenware, besonders effizient automatisiert werden kann, beispielsweise durch den Einsatz eines Dosierungsroboters.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Insoweit nachfolgend Massenanteile angegeben werden, werden diese in branchenüblicher Weise zumeist als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt.

Die Erfindung betrifft insbesondere ein Verfahren zur Herstellung einer Kautschukgrundmischung mit einer Mischvorrichtung, umfassend die Verfahrensschritte:
a) Herstellen einer ersten Kautschukzusammensetzung, umfassend ein oder mehrere erste Kautschukmaterialien, und einen oder mehrere Füllstoffe, wobei die erste Kautschukzusammensetzung in der Mischkammer eines ersten Mischaggregats der Mischvorrichtung durch Mischen der Bestandteile hergestellt wird,
b) Herstellen oder Bereitstellen einer zweiten Kautschukzusammensetzung, umfassend ein oder mehrere zweite Kautschukmaterialien in einem kombinierten Massenanteil von 80 % oder mehr, bezogen auf die Masse der zweiten Kautschukzusammensetzung, wobei die zweite Kautschukzusammensetzung in der Mischkammer eines zweiten Mischaggregats der Mischvorrichtung hergestellt oder bereitgestellt wird, wobei die zweite Kautschukzusammensetzung in der Mischkammer des zweiten Mischaggregats in Folge eines mechanischen Mischens erwärmt wird,
c) Überführen der ersten Kautschukzusammensetzung aus der Mischkammer des ersten Mischaggregats in die Mischkammer des zweiten Mischaggregats,
d) Vermischen der ersten Kautschukzusammensetzung mit der zweiten Kautschukzusammensetzung in der Mischkammer des zweiten Mischaggregats zum Erhalt der Kautschukgrundmischung.

Das erfindungsgemäße Verfahren dient der Herstellung einer Kautschukgrundmischung und ist in dieser Form insbesondere für den

Einsatz bei der Herstellung von Fahrzeugreifen vorgesehen. Bevorzugt ist entsprechend auch ein erfindungsgemäßes Verfahren, wobei die Kautschukgrundmischung eine Kautschukgrundmischung zur Verwendung bei der Herstellung von Fahrzeugreifen ist, insbesondere als Bestandteil einer Kautschukfertigmischung.

Für das erfindungsgemäße Verfahren wird eine Mischvorrichtung eingesetzt. Auch wenn es theoretisch möglich ist, das erfindungsgemäßen Verfahren auf sonstigen Mischvorrichtungen durchzuführen, welche über zwei Mischkammern verfügen, ist es mit Blick auf die in der Kautschuk verarbeitenden Industrie verfügbaren Anlagen und im Sinne einer möglichst effizienten Verfahrensführung für im Wesentlichen alle Ausführungsformen bevorzugt, wenn es sich bei dieser Mischvorrichtung um einen Tandemmischer handelt, welcher in üblicher Weise über eine Ober- und eine Untermaschine verfügt. Es kann dabei auch als Vorteil des erfindungsgemäßen Verfahrens gesehen werden, dass in dieses keine konstruktiven Änderungen an den bereits vorhandenen Tandemmischer-Anlagen erfordert, zumindest sofern nicht eine zusätzliche automatisierte Zuführung des Kautschuks in die Untermaschine vorgesehen werden soll. Bevorzugt ist ein erfindungsgemäßes Verfahren, wobei die Mischvorrichtung ein Tandemmischer ist. Bevorzugt ist dabei ein erfindungsgemäßes Verfahren, wobei das erste Mischaggregat ein Stempelkneter ist. Bevorzugt ist dabei zusätzlich oder alternativ auch ein erfindungsgemäßes Verfahren, wobei das zweite Mischaggregat ein stempelloser Kneter ist. Für die weit überwiegende Zahl der Fälle relevant ist wiederum zusätzlich oder alternativ ein erfindungsgemäßes Verfahren, wobei die Mischkammer des zweiten Mischaggregats ein größeres Volumen aufweist als die Mischkammer des ersten Mischaggregats.

Bevorzugt ist im Falle eines typischen Tandemmischers mit anderen Worten ein erfindungsgemäßes Verfahren, wobei das zweite Mischaggregat in Schwerkraftrichtung unterhalb des ersten Mischaggregats angeordnet ist, wobei das Überführen der ersten Kautschukzusammensetzung aus der Mischkammer des ersten Mischaggregats in die Mischkammer des zweiten Mischaggregats bevorzugt durch die Schwerkraft bewirkt oder befördert wird.

In den Verfahrensschritten a) und b), welche in beliebiger Reihenfolge nacheinander sowie auch teilweise oder vollständig gleichzeitig erfolgen können, werden sowohl in der Mischkammer des ersten Mischaggregats der Mischvorrichtung als auch in der Mischkammer des zweiten Mischaggregats der Mischvorrichtung jeweils eine Kautschukzusammensetzung vorgelegt. Zum Verständnis der Erfindung ist es hierbei zweckmäßig, mit Erläuterungen zu der zweiten Kautschukzusammensetzung zu beginnen, welche im zweiten Mischaggregat, d. h. in der Untermaschine vorgelegt wird.

Zumindest theoretisch ist es möglich, dass diese zweite Kautschukzusammensetzung, neben dem namensgebenden zweiten Kautschukmaterial, auch noch weitere Bestandteile umfasst, beispielsweise Prozesshilfsmittel, welche zusätzlich in die Untermaschine gegeben werden. Aus der vorstehenden Definition des Massenanteils der Kautschukmaterialien folgt jedoch, dass die zweite Kautschukzusammensetzung weit überwiegend aus dem zweiten Kautschukmaterial besteht. Ganz besonders bevorzugt handelt es sich bei der zweiten Kautschukzusammensetzung dabei um Kautschukrohmaterial, welches im Wesentlichen vollständig nur aus dem Kautschukmaterial besteht. Der Fachmann versteht insoweit, dass es sich bei der zweiten Kautschukzusammensetzung entsprechend nicht um eine Kautschukgrundmischung handelt, wie sie in üblichen Fertigungsverfahren erst in der Untermaschine hergestellt würden, insbesondere auch weil der Kautschukanteil zu hoch ist.

Nach Einschätzung der Erfinder ist es für im Wesentlichen alle Ausführungsformen bevorzugt, in der Untermaschine möglichst weitgehend nur Kautschuk vorzulegen und die sonstigen Bestandteile in der Obermaschine zuzugeben, wie es nachfolgend weiter offenbart wird. Durch dieses Vorgehen wird insbesondere das Beladen der Untermaschine besonders vereinfacht, insbesondere dadurch, dass das Kautschukmaterial unmittelbar als Ballenware eingesetzt werden kann. Bevorzugt ist entsprechend ein erfindungsgemäßes Verfahren, wobei der kombinierte Massenanteil des einen oder der mehreren zweiten Kautschukmaterialien 85 % oder mehr, bevorzugt 90 % oder mehr, besonders bevorzugt 95 % oder mehr, insbesondere bevorzugt im Wesentlichen 100 %, beträgt, bezogen auf die Masse der zweiten Kautschukzusammensetzung.

Wie vorstehend definiert, kann die zweite Kautschukzusammensetzung bereitgestellt werden, beispielsweise durch Eingabe von Ballen des Kautschukmaterials in die Untermaschine. Alternativ kann die zweite Kautschukzusammensetzung erst in der Untermaschine hergestellt werden, beispielsweise durch Vermischung des zweiten Kautschukmaterials mit den vorstehend offenbarten Prozesshilfsmitteln, wobei die Bereitstellung hierbei bevorzugt ist. Eine Form der Herstellung bzw. Vorverarbeitung der zweiten Kautschukzusammensetzung, welche nach Einschätzung der Erfinder mit Vorteilen verbunden ist, ist es, die zweite Kautschukzusammensetzung, welche weit überwiegend aus dem zweiten Kautschukmaterial besteht, im zweiten Mischaggregat durch Mastikation hinsichtlich ihrer Verarbeitungseigenschaften für das spätere Zusammenführen der Kautschukzusammensetzungen vorzuwärmen und damit zu optimieren, wodurch in vorteilhafter Weise die Durchführung eines separaten Mastikationsschrittes eingespart werden kann. Bevorzugt ist ein erfindungsgemäßes Verfahren, wobei die zweite Kautschukzusammensetzung in der Mischkammer des zweiten Mischaggregats bereitgestellt wird, oder wobei die zweite Kautschukzusammensetzung in der Mischkammer des zweiten Mischaggregats hergestellt wird, wobei das Herstellen bevorzugt die Mastikation des zweiten Kautschukmaterials umfasst.

Zur Herstellung der gewünschten Kautschukgrundmischung muss die im zweiten Mischaggregat vorgelegte zweite Kautschukzusammensetzung mit den weiteren Bestandteilen der angestrebten Kautschukgrundmischung kombiniert werden. Diese weiteren Bestandteile werden im Rahmen des erfindungsgemäßen Verfahrens in der Obermaschine vorgelegt. Hierbei erfolgt in der Mischkammer des ersten Mischaggregats eine Vermischung der Bestandteile der ersten Kautschukzusammensetzung, sodass in diesem Fall die erste Kautschukzusammensetzung im ersten Mischaggregat tatsächlich hergestellt wird. Der Ausdruck "Kautschukzusammensetzung" bringt dabei zum Ausdruck, dass auch die erste Kautschukzusammensetzung ein Kautschukmaterial umfasst. Die hohe Mischleistung des ersten Mischaggregats wird ausgenutzt, um das erste Kautschukmaterial und die nicht in der zweiten Kautschukzusammensetzung enthaltenen weiteren Bestandteile der späteren Kautschukgrundmischung homogen zu vermischen. Dies umfasst dabei zumindest die Vermischung des ersten Kautschukmaterials mit einem oder mehreren Füllstoffen, wobei insbesondere Ruß und Silica im Bereich der Reifenherstellung eine besondere Bedeutung zukommt. Bevorzugt ist ein erfindungsgemäßes Verfahren, wobei die erste Kautschukzusammensetzung in der Mischkammer des ersten Mischaggregats der Mischvorrichtung durch Mischen der Bestandteile bei einer Temperatur im Bereich von 130 bis 180 °C, bevorzugt im Bereich von 140 bis 160 °C, hergestellt wird. Bevorzugt ist zusätzlich oder alternativ ein erfindungsgemäßes Verfahren, wobei die erste Kautschukzusammensetzung als Füllstoff Ruß und/oder amorphes Siliciumdioxid, bevorzugt gefälltes amorphes Siliciumdioxid und/oder pyrogenes amorphes Siliciumdioxid, umfasst.

Neben dem ersten Kautschukmaterial und den Füllstoffen kann die erste Kautschukzusammensetzung weitere typische Additive umfassen, welche im Bereich der Kautschuk verarbeitenden Industrie im Allgemeinen sowie der Reifenherstellung im Speziellen zum Einsatz kommen. Bevorzugt ist insoweit ein erfindungsgemäßes Verfahren, wobei die erste Kautschukzusammensetzung zusätzlich ein oder mehrere weitere Additive umfasst, wobei die weiteren Additive ausgewählt sind aus der Gruppe bestehend aus Weichmachern, insbesondere Weichmacherharzen, Alterungsschutzmitteln, Aktivatoren, Prozesshilfsmitteln und Silan-Kupplungsagenzien.

Die Weichmacher können beispielsweise aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomassto-Liquid-Öle (BTL), bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, sein. Ein Weichmacher kann ein Kohlenwasserstoffharz, ein Flüssig-Polymer oder ein Mineralöl sein. Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenische Öle. Die Silan-Kupplungsagenzien können bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann, sein. Bei der letztgenannten Gruppe kann es sich z. B. um die folgenden chemischen Gruppen handeln: -SCN, -SH, -NH₂ oder-Sx- (mit x = 2 bis 8). So können als Silan-Kupplungsagenzien z.B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. Als Alterungsschutzmittel kommen beispielsweise von PPD (Phenylendiamine) abgeleitete Verbindung, z. B. N-Phenyl-N'-(1,3-dimethylbutyl)-p-phenylendiamin (6PPD), N,N'-Diphenyl-pphenylendiamin (DPPD), N,N'-Ditolyl-p-phenylendiamin (DTPD), N-Isopropyl-N'-phenyl-p-phenylendiamin (IPPD) oder 2,2,4-Trimethyl-1,2-dihydrochinolin (TMQ) in Frage. Als Aktivatoren können z. B. Zinkoxid und Fettsäuren (z. B. Stearinsäure) und/oder sonstige Aktivatoren, wie Zinkkomplexe wie z.B. Zinkethylhexanoat, fungieren. Prozesshilfsmittel sind beispielsweise Fettsäureester und Metallseifen, wie z.B. Zinkseifen und/oder Calciumseifen aber auch Mastikationshilfsmittel, wie z. B. 2,2'-Dibenzamidodiphenyldisulfid (DBD).

In Verfahrensschritt c) wird die erste Kautschukzusammensetzung in das zweite Mischaggregat überführt, bevor sie in Verfahrensschritt d) im zweiten Mischaggregat mit der zuvor erwärmten zweiten Kautschukzusammensetzung vermischt wird, um die gewünschte Kautschukgrundmischung, d. h. die Gesamtkautschukgrundmischung, zu erhalten. Bevorzugt ist dabei ein erfindungsgemäßes Verfahren, wobei das Vermischen der ersten Kautschukzusammensetzung mit der zweiten Kautschukzusammensetzung in der Mischkammer des zweiten Mischaggregats der Mischvorrichtung bei einer Temperatur im Bereich von 130 bis 180 °C, bevorzugt im Bereich von 140 bis 160 °C, erfolgt.

Es kann als Vorteil des erfindungsgemäßen Verfahrens gesehen werden, dass dieses hinsichtlich der in der ersten und zweiten Kautschukzusammensetzung vorgelegten Kautschukmaterialien sehr flexibel ist und sich das erfinderische Konzept prinzipiell auf eine große Bandbreite an verschiedenen Kautschuken übertragen lässt. Beispielhaft ist ein erfindungsgemäßes Verfahren, wobei die erste Kautschukzusammensetzung als erstes Kautschukmaterial einen oder mehrere Dienkautschuke umfasst, wobei der eine oder die mehren Dienkautschuke bevorzugt ausgewählt sind aus der Gruppe bestehend aus Polyisopren, Polybutadien, Styrolbutadien-Kautschuk und Naturkautschuk, bevorzugt Naturkautschuk. Beispielhaft ist zusätzlich oder alternativ auch ein erfindungsgemäßes Verfahren, wobei die zweite Kautschukzusammensetzung als zweites Kautschukmaterial einen oder mehrere Dienkautschuke umfasst, wobei der eine oder die mehren Dienkautschuke bevorzugt ausgewählt sind aus der Gruppe bestehend aus Polyisopren, Polybutadien, Styrolbutadien-Kautschuk und Naturkautschuk, bevorzugt Naturkautschuk.

Nach Einschätzung der Erfinder eignet sich das erfindungsgemäße Verfahren besonders dafür, um Naturkautschuk-haltige und insbesondere Naturkautschuk-reiche Kautschukgrundmischungen herzustellen, wobei für den Naturkautschuk in bevorzugten Ausgestaltungen insbesondere auch eine vorhergehende Mastikation in dem zweiten Mischaggregat erfolgen kann. Bevorzugt ist entsprechend ein erfindungsgemäßes Verfahren, wobei die erste Kautschukzusammensetzung Naturkautschuk in einem Massenanteil von 50 % oder mehr, bevorzugt 70 % oder mehr, besonders bevorzugt 90 % oder mehr, ganz besonders bevorzugt von 95 % oder mehr, insbesondere bevorzugt von 98 % oder mehr, umfasst, bezogen auf die kombinierte Masse der ersten Kautschukmaterialien in der ersten Kautschukzusammensetzung. Bevorzugt ist zusätzlich oder alternativ ein erfindungsgemäßes Verfahren, wobei die zweite Kautschukzusammensetzung Naturkautschuk in einem Massenanteil von 50 % oder mehr, bevorzugt 70 % oder mehr, besonders bevorzugt 90 % oder mehr, ganz besonders bevorzugt von 95 % oder mehr, insbesondere bevorzugt von 98 % oder mehr, umfasst, bezogen auf die kombinierte Masse der zweiten Kautschukmaterialien in der zweite Kautschukzusammensetzung. Besonders bevorzugt ist zusätzlich oder alternativ ein erfindungsgemäßes Verfahren, wobei die zweite Kautschukzusammensetzung Naturkautschuk in einem Massenanteil von 50 % oder mehr, bevorzugt 70 % oder mehr, besonders bevorzugt 90 % oder mehr, ganz besonders bevorzugt von 95 % oder mehr, insbesondere bevorzugt von 98 % oder mehr, umfasst, bezogen auf die Masse der zweite Kautschukzusammensetzung.

Hinsichtlich der Verteilung der Kautschukmaterialien, welche in der angestrebten Gesamtkautschukgrundmischung enthalten sein sollen, auf das erste und zweite Mischaggregat sind prinzipiell alle Aufteilungen möglich. Zumindest theoretisch wäre es insoweit denkbar, dass die für die Gesamtkautschukgrundmischung angestrebte Kautschukbasis beispielsweise als Ganzes auf die beiden Mischaggregate aufgeteilt wird, sodass die erste Kautschukzusammensetzung und die zweite Kautschukzusammensetzung beide sämtliche Kautschukmaterialien umfassen, die auch für die Gesamtkautschukgrundmischung vorgesehen sind. Denkbar ist somit ein erfindungsgemäßes Verfahren, wobei die erste Kautschukzusammensetzung und die zweite Kautschukzusammensetzung zumindest teilweise, bevorzugt vollständig, die gleichen Kautschukmaterialien umfassen, bevorzugt im gleichen Massenverhältnis bezogen auf die Masse der Kautschukmaterialien in den Kautschukzusammensetzungen.

Aus verfahrenstechnischer Hinsicht ist es jedoch überaus bevorzugt, die erfindungsgemäße Verfahrensführung dafür zu nutzen, die unterschiedlichen Kautschukmaterialien, welche in der späteren Gesamtkautschukgrundmischung vorliegen sollen, über die Mischaggregate zu verteilen. Beispielsweise kann es in effizienter Art und Weise möglich sein, eines der Kautschukmaterialien lediglich in die Untermaschine einzugeben, beispielsweise in der Form eines Ballens. In der Obermaschine können dann beispielsweise die übrigen Kautschukmaterialien vorgelegt werden, welche in der Gesamtkautschukgrundmischung eingesetzt werden sollen. Insbesondere bei dem vorteilhaften Einsatz von nicht separat portionierter Kautschukballenware in der Untermaschine ist es zudem denkbar, eine zusätzliche Menge des in der Untermaschine vorgelegten Kautschukmaterials auch im ersten Mischaggregat zuzusetzen, um hierdurch die Feineinstellung des Gesamtmassenanteils dieses Kautschukmaterials an die vom Rezept der Gesamtkautschukgrundmischung vorgegebene Rezeptur vorzunehmen. Besonders bevorzugt ist entsprechend ein erfindungsgemäßes Verfahren, wobei die erste Kautschukzusammensetzung und die zweite Kautschukzusammensetzung sich hinsichtlich der eingesetzten Kautschukmaterialien und/oder der Massenverhältnisse der eingesetzten Kautschukmaterialien unterscheiden, wobei die zweite Kautschukzusammensetzung bevorzugt zumindest ein Kautschukmaterial umfasst, dessen Massenanteil in der ersten Kautschukzusammensetzung 20 % oder weniger, bevorzugt 10 % oder weniger, besonders bevorzugt 1 % oder weniger, beträgt, bezogen auf die kombinierte Masse der ersten Kautschukmaterialien in der ersten Kautschukzusammensetzung.

In vorteilhafter Weise kann die Masse der im zweiten Mischaggregat vorgelegten zweiten Kautschukzusammensetzung als Stellgröße verwendet werden, um die Dosierung der Komponenten der ersten Kautschukzusammensetzung in das erste Mischaggregat zu steuern, sodass eine vorgegebene gewünschte Zusammensetzung der Gesamtkautschukgrundmischung erhalten wird, wenn die beiden Kautschukzusammensetzungen in den Verfahrensschritten c) und d) vereinigt werden. Bevorzugt ist somit ein erfindungsgemäßes Verfahren, wobei die Masse des einen oder der mehreren zweiten Kautschukmaterialien in der in der Mischkammer des zweiten Mischaggregats hergestellten oder bereitgestellten zweiten Kautschukzusammensetzung in Verfahrensschritt b) bestimmt oder berechnet wird, wobei die Zusammensetzung der ersten Kautschukzusammensetzung in Verfahrensschritt a) in Abhängigkeit von der Masse der in der zweiten Mischkammer gesteuert wird, bevorzugt automatisiert, insbesondere bevorzugt durch Steuerung eines automatisierten Beschickungssystems. Zur Umsetzung der automatisierten Beschickung der Mischkammer des ersten Mischaggregats bevorzugt ist ein erfindungsgemäßes Verfahren, wobei die Zugabe der Bestandteile der ersten Kautschukzusammensetzung in die Mischkammer des ersten Mischaggregats zumindest teilweise, bevorzugt überwiegend, besonders bevorzugt im Wesentlichen vollständig, automatisiert mit einem Fördersystem erfolgt, bevorzugt mittels Förderbändern und/oder eines Beschickungsroboters.

Es kann als großer Vorteil des erfindungsgemäßen Verfahrens gesehen werden, dass es in effizienter Weise möglich ist, Kautschukmaterial unmittelbar als Ballenware in die Untermaschine einzugeben bzw. diese als Ballenware zu dosieren und trotzdem eine genaue Einstellung der gewünschten Rezepturen zu ermöglichen. Hierdurch wird der Verwiegevorgang in vorteilhafter Weise deutlich vereinfacht, insbesondere weil die Rohmaterialien nicht auf das passende Gewicht zugeschnitten werden müssen, da vielmehr das Material in der Obermaschine entsprechend dosiert werden kann. Diese Vorteile ergeben sich dabei durch den Einsatz eines gesamten Ballens und den damit verbundenen Wegfall von Dosierungsschritten. Je nach Art des eingesetzten Mischaggregates kann es dabei vorteilhaft sein, den in seiner Gesamtheit eingesetzten und dosierten Ballen zuvor in kleinere Teile zu zerlegen, d. h. nach dem Verwiegen eine Vereinzelung von kleineren Teilen des Kautschukmaterials zu bewirken. Bevorzugt ist entsprechend ein erfindungsgemäßes Verfahren, wobei das eine oder die mehreren zweiten Kautschukmaterialien im Verfahren bei der Dosierung der Komponenten der Kautschukgrundmischung als ein oder mehrere ganze Ballen dosiert werden. Bevorzugt ist dabei zusätzlich oder alternativ ein erfindungsgemäßes Verfahren, wobei das eine oder die mehreren zweiten Kautschukmaterialien als Ballenware in die Mischkammer des zweiten Mischaggregats eingegeben werden, oder wobei das eine oder die mehreren zweiten Kautschukmaterialien vor der Eingabe in die Mischkammer des zweiten Mischaggregats zerkleinert werden, bevorzugt mit einer Schneideinheit, besonders bevorzugt mit einer in ein automatisiertes Fördersystem integrierten Schneideinheit.

Wie vorstehend erläutert, ist die Handhabung von Kautschukmaterialien vor der Zugabe in die Mischvorrichtung für die eingesetzten Arbeitskräfte häufig mit einer hohen körperlichen Belastung verbunden. Die vorteilhafte Möglichkeit des erfindungsgemäßen Verfahrens, zumindest einen Teil des Kautschukmaterials im Wesentlichen direkt als Ballenware in die Untermaschine eingeben zu können, erleichtert in vorteilhafter Weise die Automatisierung des Prozesses, wobei insbesondere auf den Einsatz eines Beschickungsroboters zurückgegriffen werden kann, durch den die körperliche Belastung der im Verfahren eingesetzten Arbeitskräfte sowie die generelle Arbeitssicherheit deutlich verbessert werden können. Bevorzugt ist demgemäß ein erfindungsgemäßes Verfahren, wobei die Zugabe der Bestandteile der zweiten Kautschukzusammensetzung in die Mischkammer des zweiten Mischaggregats zumindest teilweise, bevorzugt überwiegend, besonders bevorzugt im Wesentlichen vollständig, automatisiert mit einem Fördersystem erfolgt, bevorzugt mittels Förderbändern und/oder eines Beschickungsroboters.

In den Experimenten der Erfinder hat sich gezeigt, dass es in Verfahrensschritt c) zu unerwünschten Temperaturgradienten kommen kann, die das Mischen erschweren, wenn die warme erste Kautschukzusammensetzung aus dem ersten Mischaggregat in das zweite Mischaggregat überführt wird und dort auf eine zweite Kautschukzusammensetzung mit deutlich verringerter Temperatur trifft. Entsprechend ist es für das erfindungsgemäße Verfahren vorgesehen, dass die zweite Kautschukzusammensetzung in der Mischkammer des zweiten Mischaggregats vor dem Vermischen mit der ersten Kautschukzusammensetzung zuvor erwärmt wird, was in Folge eines mechanischen Energieeintrags erreicht wird. Insoweit schlagen die Erfinder vor, dass es zielführend ist, eine zusätzliche Temperiereinrichtung zur Temperierung der zweiten Kautschukzusammensetzung bzw. zumindest des zweiten Kautschukmaterials vorzusehen, um dieses mechanische Erwärmen zu unterstützen, sodass dieses eine Temperatur aufweist, welche sich möglichst wenig von der Temperatur der ersten Kautschukzusammensetzung im ersten Mischaggregat unterscheidet, wobei es nach Einschätzung der Erfinder vorteilhaft ist, wenn die zweite Kautschukzusammensetzung bzw. das zweite Kautschukmaterial nach dem Erwärmen im Mischer eine mittlere Temperatur von 70 °C oder mehr, bevorzugt 80 °C oder mehr, aufweist. Bevorzugt ist entsprechend ein erfindungsgemäßes Verfahren, wobei einer oder mehrere Bestandteile der zweiten Kautschukzusammensetzung, bevorzugt zumindest die zweiten Kautschukmaterialien, durch eine Temperiereinrichtung vor dem Überführen der ersten Kautschukzusammensetzung zusätzlich vorgewärmt werden, bevorzugt vor der Eingabe in die Mischkammer des zweiten Mischaggregats, wobei die Temperiereinrichtung bevorzugt einen oder mehrere Wärmestrahler, bevorzugt Infrarotstrahler, umfasst.

Die am Ende des erfindungsgemäßen Verfahrens erhaltene Kautschukgrundmischung kann anschließend in einer oder mehreren Verfahrensstufen mit weiteren Bestandteilen, insbesondere den Vulkanisationschemikalien vermischt werden, um eine vulkanisierbare Kautschukfertigmischung zu erhalten, welche anschließend in gewohnter Weise zu einem Kautschukproduktrohling ausgeformt und durch Vulkanisation zu einem Gummiprodukt umgesetzt werden kann, wobei die vulkanisierbare Kautschukfertigmischung zu einem Gummiwerkstoff wird.

Die Erfindung betrifft entsprechend auch ein Verfahren zur Herstellung einer Kautschukfertigmischung, umfassend die Verfahrensschritte des erfindungsgemäßen Verfahrens zur Herstellung einer Kautschukgrundmischung, sowie den Verfahrensschritt:
e) Vermischen der Kautschukgrundmischung oder einer aus der Kautschukgrundmischung erhaltenen Kautschukzwischenmischung mit einer oder mehreren Vulkanisationschemikalien zum Erhalt einer vulkanisierbaren Kautschukfertigmischung.

Durch den Verweis auf die Kautschukzwischenmischung wird dabei ausgedrückt, dass zwischen dem erfindungsgemäßen Verfahren zur Herstellung der Kautschukgrundmischung und der Herstellung der Kautschukfertigmischung optional noch weitere Verarbeitungsschritte liegen können.

Die Erfindung betrifft zudem auch ein Verfahren zur Herstellung eines Gummiproduktes, insbesondere eines Fahrzeugreifens, umfassend die Verfahrensschritte des erfindungsgemäßen Verfahrens zur Herstellung einer Kautschukfertigmischung, sowie die Verfahrensschritte:
f) Ausformen eines Kautschukproduktrohlings, umfassend die Kautschukfertigmischung in zumindest einem Bauteil, und
g) Vulkanisieren des Kautschukproduktrohlings zur Umsetzung der vulkanisierbaren Kautschukfertigmischung in einen Gummiwerkstoff.

Offenbart wird zudem auch einen Fahrzeugluftreifen, hergestellt oder herstellbar mit dem erfindungsgemäßen Verfahren zur Herstellung eines Gummiproduktes.

Nachfolgend werden die Erfindung und bevorzugte Ausführungsformen der Erfindung unter Bezugnahme auf die beiliegende Figur näher erläutert und beschrieben. Dabei zeigt:

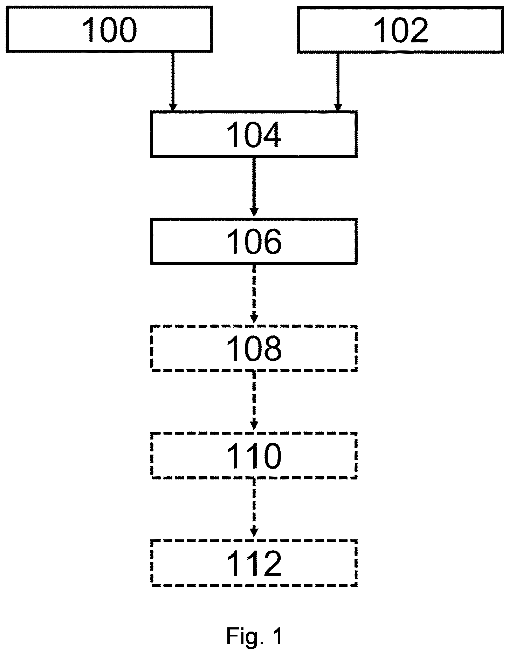

- Fig. 1: ein vereinfachtes Flussdiagramm der Verfahrensschritte des erfindungsgemäßen Verfahrens in einer bevorzugten Ausführungsform.

Fig. 1 zeigt ein vereinfachtes Flussdiagramm der Verfahrensschritte des erfindungsgemäßen Verfahrens in einer bevorzugten Ausführungsform. Im ersten Teilschritt des Verfahrens 100 werden 203,5 kg Naturkautschuk zusammen mit 8,8 kg Ruß und 8,8 kg Zinkoxid in den Stempelkneter eines Tandemmischers gegeben und dort bei einer Temperatur von etwa 150 °C zu einer ersten Kautschukzusammensetzung verarbeitet. Gleichzeitig werden in Teilschritt 102 in der stempellosen Untermaschine des Tandemmischers 70 kg Naturkautschuk vorgelegt, was etwa zwei Ballen des Kautschukmaterials entspricht. Hierbei erfolgt vor der Beschickung eine Vorwärmung des Naturkautschuks mittels Infrarotstrahler, um das in der Untermaschine eingesetzte Kautschukmaterial während des Teilschritts 102 möglichst nah an die Temperatur der ersten Kautschukzusammensetzung im ersten Mischaggregat zu bringen.

Die Zuführung der vier Ballen an Naturkautschuk erfolgt dabei automatisiert über den Einsatz eines Beladeroboters.

Während der Mischung der ersten Kautschukzusammensetzung in der Obermaschine erfolgt in der Untermaschine eine Mastikation und damit einhergehend eine weitere Vorwärmung des dort vorgelegten Naturkautschuks, um eine optimale Viskosität für den anschließenden Mischschritt zu erreichen.

In Teilschritt 104 wird der Boden der Obermaschine geöffnet, sodass die erste Kautschukzusammensetzung in die Mischkammer des darunter angeordneten zweiten Mischaggregats fällt. In diesem werden die erste und zweite Kautschukzusammensetzung vermischt und durch das Mischaggregat in Teilschritt 106 homogenisiert. Die so erhaltene Gesamtkautschukgrundmischung kann dabei in vorteilhafter Weise in ausgezeichneter Qualität hergestellt werden, wobei die Eigenschaften im Vergleich mit denen einer Kautschukgrundmischung, welche in einem herkömmlichen Verfahren hergestellt wurde, auf einem ähnlichen Niveau verbleiben, wobei insbesondere auch die optische Sichtprüfung keine Hinweise auf eine unzureichende Qualität liefert.

In dem von den Erfindern durchgeführten Versuchslauf wurden am Ende 291 kg der Gesamtkautschukgrundmischung erhalten. Im Unterschied zu der klassischen Verfahrensführung, bei der die Chargengröße durch das Volumen der Obermaschine vorgegeben wird, und bei dem entsprechend lediglich 221 kg Kautschukgrundmischung erhalten werden können (208 kg Naturkautschuk, 6,5 kg Ruß, 6,5 kg ZnO) entspricht dies einer Steigerung der Ausbeute um mehr als 30 %.

In Teilschritt 108 kann die so hergestellte Kautschukgrundmischung mit den Bestandteilen eines Vulkanisationssystems, beispielsweise Schwefel und bekannten Vulkanisationsbeschleunigern, kombiniert werden, um die Kautschukfertigmischung zu erhalten. Aus der entsprechenden Kautschukfertigmischung kann in Teilschritt 110 ein unvulkanisierter Rohling hergestellt werden, wobei gegebenenfalls weitere Komponenten, zum Beispiel Festigkeitsträger oder andere vulkanisierbare Kautschukmischungen mit eingearbeitet werden können. Der entsprechende erhaltene grüne Rohling kann abschließend in Teilschritt 112 unter üblichen Bedingungen vulkanisiert werden, um auf diese Weise das gewünschte Gummiprodukt zu erhalten.

## Patentansprüche

1. Verfahren zur Herstellung einer Kautschukgrundmischung mit einer Mischvorrichtung, umfassend die Verfahrensschritte:
a) Herstellen einer ersten Kautschukzusammensetzung, umfassend ein oder mehrere erste Kautschukmaterialien, und einen oder mehrere Füllstoffe, wobei die erste Kautschukzusammensetzung in der Mischkammer eines ersten Mischaggregats der Mischvorrichtung durch Mischen der Bestandteile hergestellt wird,
b) Herstellen oder Bereitstellen einer zweiten Kautschukzusammensetzung, umfassend ein oder mehrere zweite Kautschukmaterialien in einem kombinierten Massenanteil von 80 % oder mehr, bezogen auf die Masse der zweiten Kautschukzusammensetzung, wobei die zweite Kautschukzusammensetzung in der Mischkammer eines zweiten Mischaggregats der Mischvorrichtung hergestellt oder bereitgestellt wird, wobei die zweite Kautschukzusammensetzung in der Mischkammer des zweiten Mischaggregats in Folge eines mechanischen Mischens erwärmt wird,
c) Überführen der ersten Kautschukzusammensetzung aus der Mischkammer des ersten Mischaggregats in die Mischkammer des zweiten Mischaggregats,
d) Vermischen der ersten Kautschukzusammensetzung mit der erwärmten zweiten Kautschukzusammensetzung in der Mischkammer des zweiten Mischaggregats zum Erhalt der Kautschukgrundmischung.

2. Verfahren nach Anspruch 1, wobei das eine oder die mehreren zweiten Kautschukmaterialien im Verfahren bei der Dosierung der Komponenten der Kautschukgrundmischung als ein oder mehrere ganze Ballen dosiert werden.

3. Verfahren nach einem der Ansprüche 1 oder 2, wobei das eine oder die mehreren zweiten Kautschukmaterialien vor der Eingabe in die Mischkammer des zweiten Mischaggregats zerkleinert werden.

4. Verfahren nach einem der Ansprüche 1 bis 3, wobei die Masse des einen oder der mehreren zweiten Kautschukmaterialien in der in der Mischkammer des zweiten Mischaggregats hergestellten oder bereitgestellten zweiten Kautschukzusammensetzung in Verfahrensschritt b) bestimmt oder berechnet wird, wobei die Zusammensetzung der ersten Kautschukzusammensetzung in Verfahrensschritt a) in Abhängigkeit von der Masse der in der zweiten Mischkammer gesteuert wird.

5. Verfahren nach einem der Ansprüche 1 bis 4, wobei einer oder mehrere Bestandteile der zweiten Kautschukzusammensetzung, bevorzugt zumindest die zweiten Kautschukmaterialien, durch eine Temperiereinrichtung vor dem Überführen der ersten Kautschukzusammensetzung vorgewärmt werden.

6. Verfahren nach einem der Ansprüche 1 bis 5, wobei die zweite Kautschukzusammensetzung als zweites Kautschukmaterial einen oder mehrere Dienkautschuke umfasst.

7. Verfahren nach einem der Ansprüche 1 bis 6, wobei die erste Kautschukzusammensetzung als erstes Kautschukmaterial einen oder mehrere Dienkautschuke umfasst.

8. Verfahren nach Anspruch 7, wobei die zweite Kautschukzusammensetzung Naturkautschuk in einem Massenanteil von 50 % oder mehr umfasst, bezogen auf die Masse der zweiten Kautschukzusammensetzung.

9. Verfahren zur Herstellung einer Kautschukfertigmischung, umfassend die Verfahrensschritte des Verfahrens zur Herstellung einer Kautschukgrundmischung nach einem der Ansprüche 1 bis 8, sowie den Verfahrensschritt:
e) Vermischen der Kautschukgrundmischung oder einer aus der Kautschukgrundmischung erhaltenen Kautschukzwischenmischung mit einer oder mehreren Vulkanisationschemikalien zum Erhalt einer vulkanisierbaren Kautschukfertigmischung.

10. Verfahren zur Herstellung eines Gummiproduktes, insbesondere eines Fahrzeugreifens, umfassend die Verfahrensschritte des Verfahrens zur Herstellung einer Kautschukfertigmischung nach Anspruch 9, sowie die Verfahrensschritte:
f) Ausformen eines Kautschukproduktrohlings, umfassend die Kautschukfertigmischung in zumindest einem Bauteil, und
g) Vulkanisieren des Kautschukproduktrohlings zur Umsetzung der vulkanisierbaren Kautschukfertigmischung in einen Gummiwerkstoff.
